Europäisches Patentamt

European Patent Office

Office européen des brevets

(11) Publication number: **0 187 427**
**B1**

# EUROPEAN PATENT SPECIFICATION

(45) Date of publication of patent specification: **21.06.89**

(21) Application number: **85300070.1**

(22) Date of filing: **04.01.85**

(51) Int. Cl.⁴: **H 05 G 1/60, H 04 N 5/32,
H 04 N 1/00, G 03 B 42/02**

(54) **X-ray photographic apparatus.**

(43) Date of publication of application:
**16.07.86 Bulletin 86/29**

(45) Publication of the grant of the patent:
**21.06.89 Bulletin 89/25**

(84) Designated Contracting States:
**DE FR GB NL SE**

(56) References cited:
**EP-A-0 077 677
EP-A-0 097 465
GB-A-2 020 945
GB-A-2 096 440
US-A-4 130 834
US-A-4 315 318**

(73) Proprietor: **Mukai, Yoshibumi
2-26-16, Motokitakata
Ichikawa City Chiba Prefecture (JP)**

(72) Inventor: **Haneda, Takuya
5-2, Tenjin-cho
Hachioji City Tokyo (JP)**
Inventor: **Mukai, Yoshibumi
2-26-16, Motokitakata
Ichikawa City Chiba Prefecture (JP)**

(74) Representative: **Skone James, Robert Edmund
et al
GILL JENNINGS & EVERY 53-64 Chancery Lane
London WC2A 1HN (GB)**

Courier Press, Leamington Spa, England.

## Description

This invention relates to x-ray photographic apparatus, and more particularly to medical x-ray photographic apparatus which is capable of displaying images of an object under examination on a television monitor by passing x-rays through the object, and which is also capable of selectively providing a hard copy of the displayed images.

In medical diagnosis employing x-ray photographic apparatus, it is necessary to obtain visible images of an affected part of a patient under examination by passing x-rays through that part at a given angle and then to record them as x-ray photographs, for checking the condition of the disease, assessing the effect of the treatment, or deciding the treatment to be adopted. For this purpose, x-ray photographs have heretofore been obtained by causing x-ray radiation to be transmitted through the affected part, permitting the resultant x-ray image to fall directly on a film, and developing the film. In another conventional method, an x-ray image which is derived by passing x-ray radiation through an affected part of a patient is focused on to an image intensifier, for example. The image produced by the intensifier is photographed with a television camera to form a corresponding visible image on a television monitor, for seeing through the affected part. Then, the dosage is changed to a value appropriate for photographing, and an x-ray photograph is taken from the image displayed on the monitor using a camera.

However, where x-ray photographs of an object under examination are taken directly from the transmitted x-rays using a film, a large x-ray dosage is needed in order to expose the film, thereby increasing the amount of x-ray radiation which leaks away. Hence, the exposure dose of the patient undergoing examination is high. Also, if the apparatus is not remotely controlled, the operator of the apparatus is subjected to a large exposure dose. When images on a television monitor are photographed by a camera as described above, the photographs obtained thereby do not exhibit clear gradations and, therefore, it is impossible to obtain distinct photographs.

It is an object of the present invention to provide x-ray photographic apparatus in which the foregoing difficulties experienced with the prior art apparatuses are alleviated.

It is a more specific object of the invention to provide an x-ray photographic apparatus which is able to obtain clear images on a television monitor whilst passing a smaller quantity of x-ray radiation through an object under examination and which permits the making of clear copies of selected ones of the images on the monitor while watching the images.

According to the invention, there is provided x-ray photographic apparatus, characterised by an x-ray generator for directing x-ray radiation to an object under examination; a television camera for photographing an x-ray image produced by transmission of the radiation through the object; analog-to-digital (A/D) converter means for converting the output from the camera into digital form; a memory for storing the digital data from the converter for one image frame; first readout means for causing data to be repeatedly read from the memory; first digital-to-analog (D/A) converter means for converting the output read by the first readout means into analog form; a television monitor which receives the output from the first D/A converter means such that it is displayed on the monitor, and which operates in synchronism with the operation of reading from the memory; a register for storing the output read from the memory for one line; second readout means for causing data to be repeatedly read from the register; transfer means for transferring data for each one line to the register each time data relating to one frame are read from the memory; second digital-to-analog converter means for converting the digital data read by the second readout means into analog form; supply means for supplying the output from the second digital-to-analog converter means as a scanning light signal on to photosensitive paper; and shifting means for moving the paper, which is supplied with data for each one line, in synchronism with the transfer of data by the transfer means.

Embodiments of the invention will now be described, by way of example, with reference to the accompanying drawings, in which

Figure 1 is a block diagram of a medical x-ray photographic apparatus according to the present invention;

Figure 2 is a block diagram of a contour emphasis circuit for use with another medical x-ray photographic apparatus according to the invention; and

Figure 3 is a waveform diagram showing waveforms which appear at various locations in the photographic apparatus of the invention during the operation.

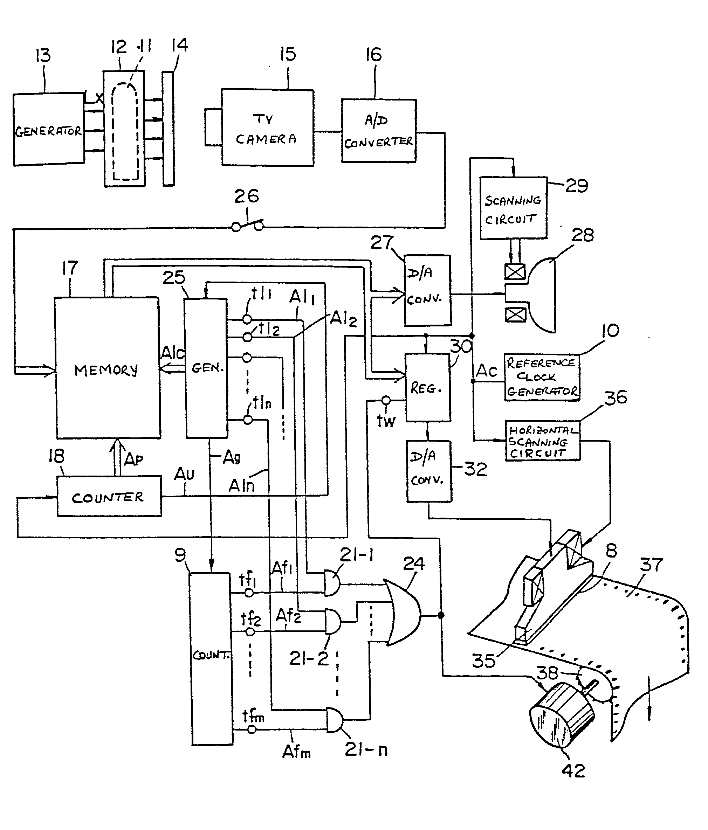

In Figure 1 of the drawings there is shown a medical x-ray photographic apparatus embodying the concept of the present invention. Briefly, this apparatus comprises an x-ray generator 13 for directing x-rays to an object or person 11 under examination, the object or person being indicated merely by a dotted block. For the sake of simplicity, the block 11 will be referred to, hereinafter, solely as an object. The apparatus further comprises a television camera 15 for photographing x-ray images transmitted through the object 11, an analog-to-digital converter 16 for converting the output from the camera into digital form, and a memory 17 for storing the digitized data of one image frame.

Specifically, the object 11 under examination is placed on a locating table 12 and is held so that the object, or an affected part to be photographed, lies within a region Lx in which the x-rays emitted by the generator 13 fall. The table 12 is capable of rotating about its centre in a three-dimensional manner so that the object can be moved relative to the generator 13. The angle at which the x-ray radiation emitted by the generator 13 strikes the affected part can be set to a desired value by rotating the table 12. After setting this incident angle, x-rays are produced by the generator 13 so that they penetrate through the object 11. The transmitted x-rays are focused on to an image intensifier 14.

The apparatus is so designed that, when it is set to work, all the electric circuits are reset. When the object 11 is irradiated by the x-ray generator 13, a television camera 15 begins to operate to photograph the image formed on the image intensifier 14. The resulting output signal from the camera 15 is converted into digital form by the A/D converter 16. The digital signal from the converter 16 is then applied to the memory 17 via a switch 26. The image signal of each frame which is derived from the transmitted x-ray images and which is photographed by the camera 15 is broken up into picture element signals, or pixel signals, which are then assigned their respective addresses in the memory and are stored at these locations. The memory 17 may comprise a 64K-bit IC memory.

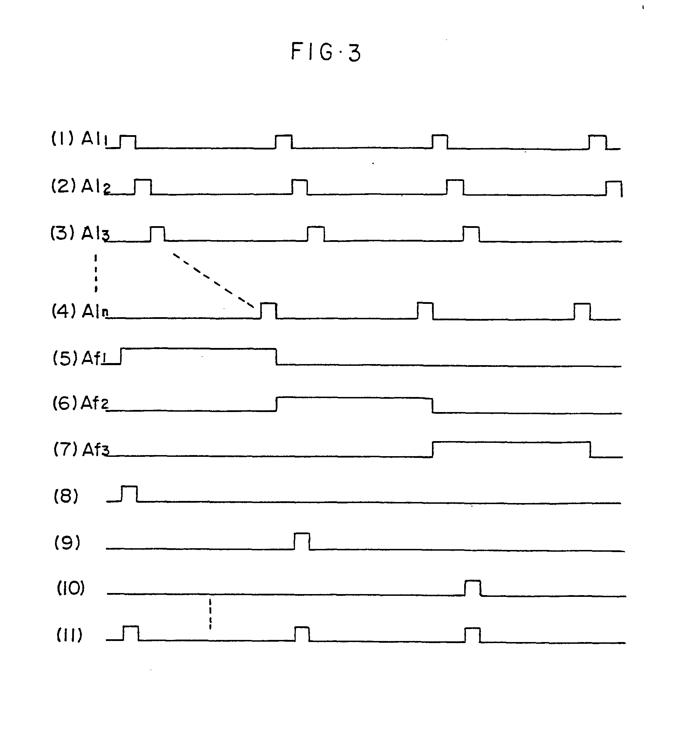

A first readout means is provided to repeatedly fetch information from the memory 17. In particular, a reference clock generator 10 feeds clock pulses Ac to a pixel counter 18, which produces pixel clock pulses Ap in response to the clock pulses Ac to successively designate pixels on an identical line in the memory 17. A line clock generator 25 operates in synchronism with the operation of the counter 18, and produces at its terminal $tl_1$ an undelayed line signal $Al_1$, as shown in Figure 3(1), corresponding to the frames. Each time all the pixels of one line are designated by the counter 18, a carry signal Au is produced by the counter to cause the generator 25 to generate at its terminals $tl_2$, $tl_3$, ..., $tl_n$ line signals $Al_2$-$Al_n$, as shown in Figures 3(2)-(4), corresponding to the frames one after another. Simultaneously, the memory 17 receives line clock pulses Alc from the generator 25 to instruct readout of data for each line. Since the counter 18 and the generator 25 operate repeatedly, the image data stored in the memory 17 can be read out repeatedly.

In this way, the pixel clock pulses Ap from the counter 18 and the line clock pulses Alc from the generator 25 cause x-ray image data corresponding to one frame to be read from the memory 17. The read data are applied to a first digital-to-analog converter 27. The output from the D/A converter 27 is fed to a television monitor 28 which operates in synchronism with the readout from the memory 17, in order to display the output on the monitor. The monitor 28 has a horizontal and vertical scanning circuit 29 which receives the clock pulses Ac from the reference clock generator 10 to synchronise the monitor 28 with the readout from the memory 17. Thus, the data relating to the x-ray images of the object 11 are read from the memory 17 and are successively displayed on the monitor 28 to form visual images corresponding to the x-ray images obtained by transmission of the radiation through the object 11.

The images displayed on the monitor 28 are watched by an operator. When he sees a desired image, he depresses a memory button (not shown) and the switch 26 is opened. The requisite data relating to the transmitted x-ray image are then placed in the memory 17. At the same time, a corresponding still, or motionless, image is displayed on the monitor 28.

Data for one line read from the memory 17 are stored in a register 30, from which data are repeatedly read out by a second readout means. Specifically, the terminals $tl_1$-$tl_n$ of the line clock generator 25 are each connected to one input terminal of respective AND circuits 21-1 to 21-n. A frame counter 9 has frame terminals $tf_1$-$tf_m$ which are connected respectively to the other input terminals of the AND circuits 21-1 to 21-n. The line clock generator 25 delivers a driving signal Ag to the input of the counter 9, and frame signals $Af_1$-$Af_m$ appear at the frame terminals of the counter, one after another. As shown in Figures 3(5)-(7), these frame signals switch to the 1 state in coincidence with the leading edges of the pulses of the line signal $Al_1$ and switch to the 0 state in coincidence with the trailing edges of the line signal $Al_n$ for each frame.

An OR circuit 24 has input terminals to which the output terminals of the AND circuits 21-1 to 21-n are connected. The register 30 has a write terminal tw to which the output of the OR circuit 24 is connected. Data which indicate an x-ray image and are read from the memory 17, are fed into the register 30, which serves to accept and store data of one line delivered from the memory 17 while the signal which is applied to the write terminal tw from the OR circuit 24 is in the 1 state.

The data relating to one line of an x-ray image which has been stored in this way are repeatedly read from the memory 30 and are furnished to a second D/A converter 32. Each time data from one frame are retrieved from the memory 17, the data are transferred to the register 30 by transfer means. More specifically, the line signal $Al_1$ causes the x-ray image signal relating to the first line to be transferred to and stored in the register. During the period of one frame, the data for the one line are held in the register 30. Then, the line signal $Al_2$ brings the signal applied to the write terminal tw of the register 30 to the 1 state, whereupon the x-ray image data relating to the second line are routed to the register 30, and are stored therein. In this way, each time data relating to one frame are read from the memory 17, data of one line corresponding to the subsequent line are transferred to and stored in the register 30.

The digital data read from the second readout means are converted into analog form by the second D/A converter 32. Supply means is provided to permit the output from the second converter means to be supplied as a scanning light signal to a photosensitive paper. More specifically, the output terminal of the register 30 is connected to the input terminal of the D/A converter 32. Connected to the output of the converter 32 is a one-line scanning type cathode-ray tube 35 having a horizontal scanning circuit 36 to which the clock pulses Ac are applied from the reference clock generator 10, so that the tube 35 may make a horizontal scan repeatedly. Therefore, x-ray image data from one line supplied from the D/A converter 32 are converted into one scanning light signal by the cathode-ray tube 35. The signal thus obtained is fed via optical fibres 8, for example, to photosensitive paper 37 disposed opposite and close to the tube 35. Hence, each time one scanning light signal is produced, the paper 37 can be exposed to the light and thermally developed corresponding to the supplied data relating to the x-ray image.

The scanning light signals can be supplied to the paper 37 through a lens. Suppose that the number of scanning lines per frame is n and that P frames are transferred per second. Then, one scanning light signal is supplied to the paper 37 for N x 1/P second(s) for exposure and thermal development.

The photosensitive paper on to which light corresponding to data relating to one line is projected is moved by shifting means in synchronism with the transfer operation performed by the transfer means. More specifically, the paper 37 is disposed so as to be movable at right angles to the scanning light signals which are produced by the cathode-ray tube 35, and to travel in the direction of the lines. The paper 37 is wound by a shaft 38, which can be rotated in equal angular steps by an electric motor 42 which is stepped in equal angular increments by the output signal from the OR circuit 24.

As the data relating to the first line of the x-ray image which has been stored in the memory 17 are transferred to the register 30, the motor 42 is stepped by one increment. At this angular position, the data for the first line are repeatedly transferred on to the paper 37 due to the scanning light signal from the cathode-ray tube 35. In this manner, the photosensitive paper is exposed to the scanning light signal from the tube 35, corresponding to the data of the first line, and it is then thermally developed. Hence, the light information is completely copied on to the paper.

Subsequently, the data relating to the second line are transferred to the register 30, and the roller 38 is rotated by one angular increment, thereby moving the paper 37 by one line spacing. At this position, the scanning light signal corresponding to the data relating to the second line is emitted by the cathode-ray tube 35 and is repeatedly transferred on to the paper 37 during the period of one frame. Similarly, the data relating to lines up to the n-th line are transferred on to the paper 37, and therefore the x-ray image data stored in the memory 17 are fully copied on to the paper 37. During these copying operations, the exposure and thermal development are automatically carried out. The transcription for one frame is completed in about 14 seconds, for example.

Although not shown, thermal development is performed immediately after exposure. If necessary, the paper on to which the x-ray image has been copied may be automatically cut by a cutter and taken out.

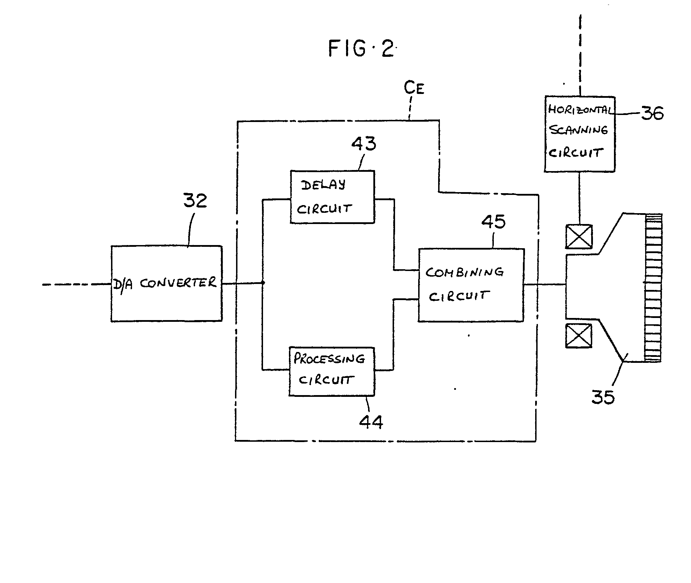

Referring next to Figure 2, there is shown the structure and peripheral connecting portions of a contour emphasis circuit $C_E$ is connected between the second D/A converter 32 and the cathode-ray tube 35. In this second embodiment, the analog signal delivered by the second D/A converter 32 is applied to a delay circuit 43, and to a processing circuit 44 which differentiates the input signal under predetermined conditions to emphasize desired fringes of the signal. The output from the processing circuit 44 is combined with the original signal passed through the delay circuit 43 by a combining circuit 45. Hence, the analog signal appearing at the output terminal of the combining circuit 45 has its contour emphasized in the horizontal direction under certain conditions. Alternatively, the contour emphasis circuit $C_E$ may operate in a digital manner to emphasize the contour under certain conditions. In this case, the emphasis circuit $C_E$ is placed before the second D/A converter.

It is to be understood that the apparatus of the present invention can be designed to carry out various image processings including colouring of a certain region of a transmitted x-ray image, as well as to emphasize the contour by means of the emphasis circuit $C_E$.

As will be understood from the above description of the invention, the image obtained by transmission of x-rays through the object 11 under examination can be observed via the monitor 28. During this monitoring operation, if a desired image is noticed and the switch 26 is opened, then this image can be stored in the memory 17. In this case, in order to check the image on the monitor 28 with greater reliability, data may be repeatedly read from the memory 17 while the same image is displayed on the monitor 28. In this way, only the necessary x-ray images can be selected. The obtained signal is transferred to the register 30 for every individual line. The stored data are retrieved and fed to the photosensitive paper 37 in the form of one scanning light signal for each line. A sufficient time is given to expose the paper to the successively applied light signals, and then the paper is thermally developed. Since the paper 37 is shifted for every line, all the lines of the transmitted x-ray image can be reproduced on the paper as a vivid visual image.

By use of the invention, it is possible to form a visual image on the monitor 16 using a small amount of x-ray radiation, and the exposure dose that the operator of the apparatus experiences can therefore be greatly reduced, say by a factor of 10 or more below the exposure dose in the case of the prior art apparatuses. It is also possible for the x-ray image data stored in the memory 17 to be read out at a low speed and then transmitted via an acoustic coupler over a low-speed transmission line, such as a local telephone line. Accordingly, the x-ray image data stored in the memory 17 can be transferred via such a telephone line to a hospital where specialists are stationed, for close examination, or in the absence of doctors, for tentative diagnosis.

The memory 17 may be interfaced to a host computer via a minicomputer so that the x-ray image data stored in the memory may be written to the host computer to create a file. This will enable various data processing operations to be carried out employing various peripheral units.

Furthermore, a cassette magnetic tape device may be connected to the photographic device according to the invention, via a magnetic tape control module. In this arrangement, the obtained x-ray image signal is recorded on a magnetic tape. The recorded data can be directly retrieved from the tape in batches for duplication, in order to process or make use of various x-ray images effectively.

As described above in detail, the present invention allows the object under examination to be observed on the television monitor although passing a greatly reduced amount of x-ray radiation through the object. Desired ones of the images presented on the monitor can be selected while they are being monitored. Clear copies of the selected images can be rapidly created. The x-ray image data stored in the memory can be processed to emphasize desired portions of the images. Furthermore, x-ray image signals can be transmitted at low speeds to desired locations over a telephone line, for close medical examination.

**Claims**

1. X-ray photographic apparatus, comprising an x-ray generator (13) for directing x-ray radiation to an object under examination; a television camera (14, 15) for photographing an x-ray image produced by transmission of the radiation through the object; analog-to-digital (A/D) converter means (16) for converting the output from the camera into digital form; a memory (17) for storing the digital data from the converter for one image frame; first readout means (10, 18) for causing data to be repeatedly read from the memory; first digital-to-analog (D/A) converter means (27) for converting the output read by the first readout means into analog form; a television monitor (28) which receives the output from the first D/A converter means such that it is displayed on the monitor, and which operates in synchronism with the operation of reading from the memory; a register (30) for storing the output read from the memory for one line; second readout means (9, 21-1 to 21-n, 24) for causing data to be repeatedly read from the register; transfer means for transferring data for each one line to the register each time data relating to one frame are read from the memory; second digital-to-analog converter means (32) for converting the digital data read by the second readout means into analog form; supply means (35) for supplying the output from the second digital-to-analog converter means as a scanning light signal on to photosensitive paper (37); and shifting means (38, 42) for moving the paper, which is supplied with data for each one line, in synchronism with the transfer of data by the transfer means.

2. Apparatus as claimed in claim 1, characterised in that the television camera comprises an image intensifier (14) and a television pickup tube (15).

3. Apparatus as claimed in claim 1 or claim 2, characterised in that the supply means (35) includes a cathode-ray tube.

4. Apparatus as claimed in claim 3, characterised in that the supply means further includes optical fibres (8) positioned between the cathode-ray tube (35) and the photosensitive paper (37).

5. Apparatus as claimed in claim 3, characterised in that the cathode-ray tube (35) has a horizontal scanning circuit (36) which is supplied with clock pulses from a reference clock generator (10).

6. Apparatus as claimed in any preceding claim, characterised in that the first readout means comprises a reference clock generator (10) for producing clock pulses, a first counter (18) which counts these clock pulses, and a second counter connected between the first counter and the memory (17).

7. Apparatus as claimed in any preceding claim, characterised in that the second readout means comprises a counter (9) and logic circuitry (21-1 to 21-n, 24).

8. Apparatus as claimed in any preceding claim, characterised in that the shifting means comprises a stepping motor (42).

9. Apparatus as claimed in any preceding claim, characterised by a contour emphasis circuit ($C_E$) located between the second digital-to-analog converter means (32) and the supply means (35).

10. Apparatus as claimed in claim 9, characterised in that the contour emphasis circuit ($C_E$) comprises a delay circuit (43) connected to the output of the second digital-to-analog converter means (32), a differentiation circuit (44) also connected to the output of the second digital-to-analog converter means, and a combining circuit (45) for combining the output signals from these two circuits and for applying the resulting sum signal to the supply means (35).

11. Apparatus as claimed in any one of claims 1-8, characterised by a contour emphasis circuit ($C_E$) which operates digitally and is located before the second digital-to-analog converter means (32).

12. Apparatus as claimed in any preceding claim, characterised in that data are read from the memory (17) at a low speed, are fed to an acoustic compler, and are thereby transmitted over a low-speed transmission line.

**Patentansprüche**

1. Röntgenstrahlenfotografiereinrichtung, umfassend einen Röntgenstrahlererzeuger (13) zum Richten von Röntgenstrahlung auf ein untersuchtes Objekt; eine Fernsehkamera (14, 15) zum Fotografieren eines Röntgenstrahlenbilds, das mittels Transmission der Strahlung durch das Objekt erzeugt worden ist; eine Analog-zu-Digital-(A/D) Umsetzereinrichtung (16) zum Umwandeln der Ausgangsgröße von der Kamera in Digitalform; einen Speicher (17) zum Speichern der Digitaldaten von dem Umsetzer für einen Bildfeldrahmen; eine erste Ausleseeinrichtung (10, 18) zum Bewirken, daß Daten wiederholt von dem Speicher ausgelesen werden; eine erste Digital-zu-Analog-(D/A) Umsetzereinrichtung (27) zum Umwandeln der von der ersten Ausleseeinrichtung ausgelesenen Ausgangsgröße in Analogform; einen Fernsehmonitor (28), der die Ausgangsgröße von der ersten D/A-Umsetzereinrichtung derart empfängt, daß sie auf dem Monitor in Sichtwiedergabe wiedergegeben wird, und welcher synchron mit dem Betrieb des Lesens aus dem Speicher arbeitet; ein Register (30) zum Speichern der aus dem Speicher für eine Zeile gelesenen Ausgangsgröße; eine zweite Ausleseeinrichtung (9, 21-1 bis 21-n, 24) zum Bewirken, daß Daten wiederholt aus dem Register gelesen werden; eine Übertragungseinrichtung zum Übertragen von Daten für je eine Zeile zu dem Register jedesmal, wenn Daten, die sich auf ein Einzelbild beziehen, aus dem Speicher gelesen werden; eine zweite Digital-zu-Analog-Umsetzereinrichtung (32) zum Umwandeln der von der zweiten Ausleseeinrichtung gelesenen Digitaldaten in Analogform; eine Zuführungseinrichtung (35) zum Zuführen der Ausgangsgröße von der zweiten Digital-zu-Analog-Umsetzereinrichtung als ein Abtastlichtsignal auf fotoempfindliches Papier (37); und eine Verschiebungseinrichtung (38, 42) zum Bewegen des papiers, dem Daten für je eine Zeile zugeführt werden, synchron mit der Übertragung von Daten durch die Übertragungseinrichtung.

2. Einrichtung nach Anspruch 1, dadurch gekennzeichnet, daß die Fernsehkamera einen Bildverstärker (14) und eine Fernsehaufnahmeröhre (15) umfaßt.

3. Einrichtung nach Anspruch 1 oder 2, dadurch gekennzeichnet, daß die Zuführungseinrichtung (35) eine Kathodenstrahlröhre aufweist.

4. Einrichtung nach Anspruch 3, dadurch gekennzeichnet, daß die Zuführungseinrichtung weiter optische Fasern (8) aufweist, die zwischen der Kathodenstrahlröhre (35) und dem fotoempfinglichen papier (37) positioniert sind.

5. Einrichtung nach Anspruch 3, dadurch gekennzeichnet, daß die Kathodenstrahlröhre (35) eine Horizontalabtastschaltung (36) hat, der Taktimpulse von einem Bezugstaktgenerator (10) zugeführt werden.

6. Einrichtung nach irgendeinem vorhergehenden Anspruch, dadurch gekennzeichnet, daß die erste Ausleseeinrichtung einen Bezugstaktgenerator (10) zum Erzeugen von Taktimpulsen, einen ersten Zähler (18), der diese Taktimpulse zählt, und einen zweiten Zähler, der zwischen den ersten Zähler und den Speicher (17) geschaltet ist, umfaßt.

7. Einrichtung nach irgendeinem vorhergehenden Anspruch, dadurch gekennzeichnet, daß die zweite Ausleseeinrichtung einen Zähler (9) und eine Logikschaltung (21-1 bis 21-n, 24) umfaßt.

8. Einrichtung nach irgendeinem vorhergehenden Anspruch, dadurch gekennzeichnet, daß die Verschiebungseinrichtung einen Schrittmotor (42) umfaßt.

9. Einrichtung nach irgendeinem vorhergehenden Anspruch, gekennzeichnet durch eine Konturhervorhebungsschaltung (C$_E$), die sich zwischen der zweiten Digital-zu-Analog-Umsetzereinrichtung (32) und der Zuführungseinrichtung (35) befindet.

10. Einrichtung nach Anspruch 9, dadurch gekennzeichnet, daß die Konturhervorhebungsschaltung (C$_E$) eine Verzögerungsschaltung (43) umfaßt, die mit dem Ausgang der zweiten Digital-zu-Analog-Umsetzereinrichtung (32) verbunden ist, sowie eine Differenzierungsschaltung (44), die auch mit dem Ausgang der zweiten Digital-zu-Analog-Umsetzereinrichtung verbunden ist, und eine Kombinierschaltung (45) zum Kombinieren der Ausgangssignale von diesen beiden Schaltungen und zum Zuführen des resultierenden Summensignals zu der Zuführungseinrichung (35).

11. Einrichtung nach irgendeinem der Ansprüche 1 bis 8, gekennzeichnet durch eine Konturhervorhebungsschaltung (C$_E$), die digital arbeitet und sich vor der zweiten Digital-zu-Analog-Umsetzereinrichtung (32) befindet.

12. Einrichtung nach irgendeinem vorhergehenden Anspruch, dadurch gekennzeichnet, daß Daten, die aus dem Speicher (17) mit einer niedrigen Geschwindigkeit gelesen werden, einem akustischen Koppler zugeführt und dadurch über eine Übertragungsleitung niedriger Geschwindigkeit übertragen werden.

**Revendications**

1. Appareil pour la photographie par rayons X, comportant un générateur de rayons X (13) pour diriger un rayonnement de rayons X vers un objet examiné; une caméra de télévision (14, 15) pour photographier une image de rayons X produite par la transmission du rayonnement à travers l'objet; des moyens (16) formant convertisseur analogique-numérique (A/N) pour convertir la sortie de la caméra sous une forme numérique; une mémoire (17) pour mémoriser les données numériques venant du convertisseur pour une trame d'image; des premiers moyens de lecture (10, 18) pour faire lire de façon répétée les données depuis la mémoire; des premiers moyens (27) formant convertisseur numérique-analogique (N/A) pour convertir la sortie lue par les premiers moyens de lecture sous une forme analogique; un écran de télévision (28) qui reçoit la sortie des premiers moyens formant convertisseur numérique-analogique de telle sorte qu'elle soit affichée sur l'écran, et qui fonctionne en synchronisme avec l'opération de lecture depuis la mémoire; un registre (30) pour mémoriser la sortie lue depuis la mémoire pour une ligne; des deuxièmes moyens de lecture (9, 21-1 à 21-n, 24) pour provoquer la lecture répétée des données depuis le registre; des moyens de transfert pour transférer les données pour chaque ligne au registre à chaque fois que des données concernant une trame sont lues depuis la mémoire; des deuxièmes moyens (32) formant convertisseur numérique-analogique pour convertir les données numériques lues par les deuxièmes moyens de lecture sous une forme analogique; des moyens de délivrance (35) pour délivrer la sortie venant des deuxièmes moyens formant convertisseur numérique-analogique sous la forme d'un signal de lumière de balayage sur un papier photosensible (37); et des moyens de décalage (38, 42) pour déplacer le papier, auxquels sont délivrés des données pour chaque ligne, en synchronisme avec le transfert de données par les moyens de transfert.

2. Appareil selon la revendication 1, caractérisé en ce que la caméra de télévision comporte un intensificateur d'image (14) et un tube de prise de vues de télévision (15).

3. Appareil selon la revendication 1 ou la revendication 2, caractérisé en ce que les moyens de délivrance (35) comportent un tube à rayons cathodiques.

4. Appareil selon la revendication 3, caractérisé en ce que les moyens de délivrance comportent de plus des fibres optiques (8) positionnées entre le tube à rayons cathodiques (35) et le papier photosensible (37).

5. Appareil selon la revendication 3, caractérisé en ce que le tube à rayons cathodiques (35) possède un circuit de balayage horizontal (36) qui reçoit des impulsions d'horloge depuis un générateur d'horloge de référence (10).

6. Appareil selon l'une quelconque des revendications précédentes caractérisé en ce que les premiers moyens de lecture comportent un générateur d'horloge de référence (10) pour produire des impulsions d'horloge, un premier compteur (18) qui compte ces impulsions d'horloge, et un deuxième compteur connecté entre le premier compteur et la mémoire (17).

7. Appareil selon l'une quelconque des revendications précédentes, caractérisé en ce que les deuxièmes moyens de lecture comportent un compteur (9) et des circuits logiques (21-1 à 21-n, 24).

8. Appareil selon l'une quelconque des revendications précédentes, caractérisé en ce que les moyens de décalage comportent un moteur pas-à-pas (42).

9. Appareil selon l'une quelconque des revendications précédentes, caractérisé par un circuit d'accentuation des contours ($C_E$) situé entre les deuxièmes moyens (32) formant convertisseur numérique-analogique et les moyens de délivrance (35).

10. Appareil selon la revendication 9, caractérisé en ce que le circuit d'accentuation des contours ($C_E$) comporte un circuit de retard (43) connecté à la sortie des deuxièmes moyens (32) formant convertisseur numérique-analogique, un circuit de différenciation (44) également connecté à la sortie des deuxièmes moyens formant convertisseur numérique-analogique, et un circuit de combinaison (45) pour combiner les signaux de sortie venant de ces deux circuits et pour appliquer le signal de somme résultant aux moyens de délivrance (35).

11. Appareil selon l'une quelconque des revendications 1 à 8, caractérisé par un circuit d'accentuation des contours ($C_E$) qui fonctionne de façon numérique et qui est situé avant les deuxièmes moyens (32) formant convertisseur numérique-analogique.

12. Appareil selon l'une quelconque des revendications précédentes, caractérisé en ce que des données sont lues depuis la mémoire (17) à une faible vitesse, qu'elles sont délivrées à un coupleur acoustique, et qu'elles sont par conséquent transmises par une ligne de transmission à basse vitesse.

FIG·2

CE

43 — DELAY CIRCUIT

32 — D/A CONVERTER

45 — COMBINING CIRCUIT

44 — PROCESSING CIRCUIT

36 — HORIZONTAL SCANNING CIRCUIT

35

FIG·3

(1) AI₁

(2) AI₂

(3) AI₃

(4) AIn

(5) Af₁

(6) Af₂

(7) Af₃

(8)

(9)

(10)

(11)